(19) Europäisches Patentamt
European Patent Office
Office européen des brevets

(11) **EP 4 535 698 A1**

(12) **EUROPEAN PATENT APPLICATION**

(43) Date of publication:
**09.04.2025 Bulletin 2025/15**

(21) Application number: **23201274.0**

(22) Date of filing: **02.10.2023**

(51) International Patent Classification (IPC):
*H04L 1/1607* (2023.01)   *H04L 1/1822* (2023.01)
*H04L 1/1829* (2023.01)   *H04L 1/1867* (2023.01)

(52) Cooperative Patent Classification (CPC):
**H04L 1/1835; H04L 1/1671; H04L 1/1822;
H04L 1/1874**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy
02610 Espoo (FI)**

(72) Inventors:
• **HOOLI, Kari Juhani
90620 Oulu (FI)**
• **HUGL, Klaus
A-1070 Vienna (AT)**
• **TIIROLA, Esa Tapani
90620 Oulu (FI)**
• **TERVO, Oskari
90630 Oulu (FI)**

(74) Representative: **Script Intellectual Property LLP
Suite J, Anchor House
School Close
Chandlers Ford
Eastleigh, Hampshire SO53 4DY (GB)**

(54) **APPARATUS, METHOD AND COMPUTER PROGRAM**

(57) There is provided an apparatus comprising means for receiving at least one downlink data transmission at a user equipment from a network node, means for determining that decoding of the at least one downlink data transmission at the user equipment is unsuccessful, means for determining, based on the determining that decoding of the at least one downlink data transmission at the user equipment is unsuccessful and at least in part on the downlink data transmission, soft buffer information, means for providing, from the user equipment to the network node, the soft buffer information and means for receiving scheduling for a further downlink data transmission, wherein the scheduling for the further downlink data transmission is dependent on the provided soft buffer information.

Figure 6

## Description

*Field*

The present application relates to a method, apparatus, system and computer program and in particular but not exclusively to UE assistance information.

*Background*

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is Universal Mobile Telecommunications System (UMTS) Terrestrial Radio Access Network (UTRAN) (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

*Summary*

In a first aspect there is provided an apparatus comprising means for receiving at least one downlink data transmission at a user equipment from a network node, means for determining that decoding of the at least one downlink data transmission at the user equipment is unsuccessful, means for determining, based on the determining that decoding of the at least one downlink data transmission at the user equipment is unsuccessful and at least in part on the downlink data transmission, soft buffer information, means for providing, from the user equipment to the network node, the soft buffer information and means for receiving scheduling for a further downlink data transmission, wherein the scheduling for the further downlink data transmission is dependent on the provided soft buffer information.

The soft buffer information may comprise an indication whether or not soft bits of the downlink data transmission are stored in a soft buffer memory of the user equipment.

Each at least one data transmission may be associated with a given hybrid automatic repeat request, HARQ, process

The indication may be provided with HARQ feedback or uplink control information.

The indication may be provided as a separate bit with the HARQ feedback.

The indication maybe jointly coded with the HARQ feedback.

The apparatus may comprise means for determining whether to store soft bits for the downlink HARQ process based on at least one of the following: a priority associated with the downlink data transmission, whether the downlink data transmission is decoded successfully or an available capacity of the soft buffer memory.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The apparatus may comprise means for receiving a configuration from the network node at the user equipment to provide the soft buffer information.

The apparatus may comprise means for receiving the configuration using radio resource control signalling or a medium access control control element.

The configuration may comprise a configuration of soft buffer information reporting or an activation of soft buffer information reporting.

The apparatus may comprise means for providing an indication of user equipment soft buffer information reporting capability from the user equipment to the network node and means for receiving the configuration from the network node at the user equipment to provide the soft buffer information in response.

The scheduling received for the further downlink data transmission may be dependent on at least one of the following means: receiving a configuration to use a smaller number of HARQ processes, modified scheduling parameters, receiving an indication not to save soft buffer values for the corresponding downlink data transmission or receiving a scheduling for the further downlink data transmission on a smaller number of HARQ processes.

In a second aspect there is provided an apparatus comprising means for providing at least one downlink data transmission to a user equipment from a network node, means for receiving, from the user equipment at the network node, soft buffer information determined based on the at least one downlink data transmission and means for determining further downlink data transmission scheduling based on the received soft buffer information.

The soft buffer information may comprise an indication whether or not soft bits of the downlink data transmission are stored in a soft buffer memory of the user equipment.

The indication may be provided with HARQ feedback or uplink control information.

The indication may be provided as a separate bit with the HARQ feedback.

The indication may be jointly coded with the HARQ feedback.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The apparatus may comprise means for providing an indication from the network node to the user equipment to provide the soft buffer information.

The apparatus may comprise means for providing the indication using radio resource control signalling or a medium access control control element.

The indication may comprise a configuration of soft buffer information reporting or an activation of soft buffer information reporting.

The apparatus may comprise means for receiving an indication of user equipment soft buffer information reporting capability from the user equipment to the network node and means for providing the indication from the network node at the user equipment to provide the soft buffer information in response.

Means for determining transmission scheduling comprises means for at least one of the following: providing an indication to the user equipment that soft bits for further downlink data transmission should not be stored, configuring the user equipment to use a smaller number of HARQ processes, modified scheduling parameters, or scheduling downlink data transmission to the user equipment on a smaller number of HARQ processes.

In a third aspect there is provided a method comprising receiving at least one downlink data transmission at a user equipment from a network node, determining that decoding of the at least one downlink data transmission at the user equipment is unsuccessful, determining, based on the determining that decoding of the at least one downlink data transmission at the user equipment is unsuccessful and at least in part on the downlink data transmission, soft buffer information, providing, from the user equipment to the network node, the soft buffer information and receiving scheduling for a further downlink data transmission, wherein the scheduling for the further downlink data transmission is dependent on the provided soft buffer information.

The soft buffer information may comprise an indication whether or not soft bits of the downlink data transmission are stored in a soft buffer memory of the user equipment.

Each at least one data transmission may be associated with a given hybrid automatic repeat request, HARQ, process

The indication may be provided with HARQ feedback or uplink control information.

The indication may be provided as a separate bit with the HARQ feedback.

The indication maybe jointly coded with the HARQ feedback.

The method may comprise determining whether to store soft bits for the downlink HARQ process based on at least one of the following: a priority associated with the downlink data transmission, whether the downlink data transmission is decoded successfully or an available capacity of the soft buffer memory.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The method may comprise receiving a configuration from the network node at the user equipment to provide the soft buffer information.

The method may comprise receiving the configuration using radio resource control signalling or a medium access control control element.

The configuration may comprise a configuration of soft buffer information reporting or an activation of soft buffer information reporting.

The method may comprise providing an indication of user equipment soft buffer information reporting capability from the user equipment to the network node and receiving the configuration from the network node at the user equipment to provide the soft buffer information in response.

The scheduling received for the further downlink data transmission may be dependent on at least one of the following: receiving a configuration to use a smaller number of HARQ processes, modified scheduling parameters, receiving an indication not to save soft buffer values for the corresponding downlink data transmission or receiving a scheduling for the further downlink data transmission on a smaller number of HARQ processes.

In a fourth aspect there is provided a method comprising providing at least one downlink data transmission to a user equipment from a network node, receiving, from the user equipment at the network node, soft buffer information determined based on the at least one downlink data transmission and determining further downlink data transmission scheduling based on the received soft buffer information.

The soft buffer information may comprise an indication whether or not soft bits of the downlink data transmission are stored in a soft buffer memory of the user equipment.

The indication may be provided with HARQ feedback or uplink control information.

The indication may be provided as a separate bit with the HARQ feedback.

The indication may be jointly coded with the HARQ feedback.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The method may comprise providing an indication from the network node to the user equipment to provide the soft buffer information.

The method may comprise providing the indication using radio resource control signalling or a medium access control control element.

The indication may comprise a configuration of soft buffer information reporting or an activation of soft buffer information reporting.

The method may comprise receiving an indication of user equipment soft buffer information reporting capability from the user equipment to the network node and providing the indication from the network node at the user equipment to provide the soft buffer information in response.

Determining transmission scheduling may comprise at least one of the following: providing an indication to the user equipment that soft bits for further downlink data transmission should not be stored, configuring the user equipment to use a smaller number of HARQ processes, modified scheduling parameters, or scheduling downlink data transmission to the user equipment on a smaller number of HARQ processes.

In a fifth aspect there is provided an apparatus comprising at least one processor, and at least one memory storing instructions that, when executed by the at least one processor, cause the apparatus at least to receive at least one downlink data transmission at a user equipment from a network node, determine that decoding of the at least one downlink data transmission at the user equipment is unsuccessful, determine, based on the determining that decoding of the at least one downlink data transmission at the user equipment is unsuccessful and at least in part on the downlink data transmission, soft buffer information, provide, from the user equipment to the network node, the soft buffer information and receive scheduling for a further downlink data transmission, wherein the scheduling for the further downlink data transmission is dependent on the provided soft buffer information.

The soft buffer information may comprise an indication whether or not soft bits of the downlink data transmission are stored in a soft buffer memory of the user equipment.

Each at least one data transmission may be associated with a given hybrid automatic repeat request, HARQ, process

The indication may be provided with HARQ feedback or uplink control information.

The indication may be provided as a separate bit with the HARQ feedback.

The indication maybe jointly coded with the HARQ feedback.

The apparatus may be caused to determine whether to store soft bits for the downlink HARQ process based on at least one of the following: a priority associated with the downlink data transmission, whether the downlink data transmission is decoded successfully or an available capacity of the soft buffer memory.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The apparatus may be caused to receive a configuration from the network node at the user equipment to provide the soft buffer information.

The apparatus may be caused to receive the configuration using radio resource control signalling or a medium access control control element.

The configuration may comprise a configuration of soft buffer information reporting or an activation of soft buffer information reporting.

The apparatus may be caused to provide an indication of user equipment soft buffer information reporting capability from the user equipment to the network node and receive the configuration from the network node at the user equipment to provide the soft buffer information in response.

The scheduling received for the further downlink data transmission may be dependent on at least one of the following means: receiving a configuration to use a smaller number of HARQ processes, modified scheduling parameters, receiving an indication not to save soft buffer values for the corresponding downlink data transmission or receiving a scheduling for the further downlink data transmission on a smaller number of HARQ processes.

In a sixth aspect there is provide an apparatus comprising at least one processor, and at least one memory storing instructions that, when executed by the at least one processor, cause the apparatus at least to provide at least one downlink data transmission to a user equipment from a network node, receive, from the user equipment at the network node, soft buffer information determined based on the at least one downlink data transmission and determine further downlink data transmission scheduling based on the received soft buffer information.

The soft buffer information may comprise an indication whether or not soft bits of the downlink data transmission are stored in a soft buffer memory of the user equipment.

The indication may be provided with HARQ feedback or uplink control information.

The indication may be provided as a separate bit with the HARQ feedback.

The indication may be jointly coded with the HARQ feedback.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The apparatus may be caused to provide an indication from the network node to the user equipment to provide the soft buffer information.

The apparatus may be caused to provide the indication using radio resource control signalling or a medium access control control element.

The indication may comprise a configuration of soft buffer information reporting or an activation of soft buffer information reporting.

The apparatus may be caused to receive an indication of user equipment soft buffer information reporting capability from the user equipment to the network node and provide the indication from the network node at the user equipment to provide the soft buffer information in response.

Determining transmission scheduling may comprises at least one of the following: providing an indication to the user equipment that soft bits for further downlink data transmission should not be stored, configuring the user equipment to use a smaller number of HARQ processes, modified scheduling parameters, or scheduling downlink data transmission to the user equipment on a smaller number of HARQ processes.

In a seventh aspect there is provided a computer readable medium comprising instructions which, when executed by an apparatus, cause the apparatus to perform at least the following: receiving at least one downlink data transmission at a user equipment from a network node; determining that decoding of the at least one downlink data transmission at the user equipment is unsuccessful, determining, based on the determining that decoding of the at least one downlink data transmission at the user equipment is unsuccessful and at least in part on the downlink data transmission, soft buffer information, providing, from the user equipment to the network node, the soft buffer information and receiving scheduling for a further downlink data transmission, wherein the scheduling for the further downlink data transmission is dependent on the provided soft buffer information.

The soft buffer information may comprise an indication whether or not soft bits of the downlink data transmission are stored in a soft buffer memory of the user equipment.

Each at least one data transmission may be associated with a given hybrid automatic repeat request, HARQ, process

The indication may be provided with HARQ feedback or uplink control information.

The indication may be provided as a separate bit with the HARQ feedback.

The indication maybe jointly coded with the HARQ feedback.

The apparatus may be caused to perform determining whether to store soft bits for the downlink HARQ process based on at least one of the following: a priority associated with the downlink data transmission, whether the downlink data transmission is decoded successfully or an available capacity of the soft buffer memory.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The apparatus may be caused to perform receiving a configuration from the network node at the user equipment to provide the soft buffer information.

The apparatus may be caused to perform receiving the configuration using radio resource control signalling or a medium access control control element.

The configuration may comprise a configuration of soft buffer information reporting or an activation of soft buffer information reporting.

The apparatus may be caused to perform providing an indication of user equipment soft buffer information reporting capability from the user equipment to the network node and receiving the configuration from the network node at the user equipment to provide the soft buffer information in response.

The scheduling received for the further downlink data transmission may be dependent on at least one of the following means: receiving a configuration to use a smaller number of HARQ processes, modified scheduling parameters, receiving an indication not to save soft buffer values for the corresponding downlink data transmission or receiving a scheduling for the further downlink data transmission on a smaller number of HARQ processes.

In an eighth aspect there is provided a computer readable medium comprising instructions which, when executed by an apparatus, cause the apparatus to perform at least the following providing at least one downlink data transmission to a user equipment from a network node, receiving, from the user equipment at the network node, soft buffer information determined based on the at least one downlink data transmission and determining further downlink data transmission scheduling based on the received soft buffer information.

The soft buffer information may comprise an indication whether or not soft bits of the downlink data transmission are stored in a soft buffer memory of the user equipment.

The indication may be provided with HARQ feedback or uplink control information.

The indication may be provided as a separate bit with the HARQ feedback.

The indication may be jointly coded with the HARQ feedback.

The soft buffer information may comprise an indication of available soft buffer capacity.

The soft buffer information may comprise an indication of available soft buffer capacity with respect to at least one threshold capacity value.

The indication may be provided with HARQ feedback, periodic uplink control information, aperiodic uplink control information or a medium access control control element.

The apparatus may be caused to perform providing an indication from the network node to the user equipment to provide the soft buffer information.

The apparatus may be caused to perform providing the indication using radio resource control signalling or a medium access control control element.

The indication may comprise a configuration of soft buffer information reporting or an activation of soft buffer information reporting.

The apparatus may be caused to perform receiving an indication of user equipment soft buffer information reporting capability from the user equipment to the network node and means for providing the indication from the network node at the user equipment to provide the soft buffer information in response.

Determining transmission scheduling may comprise at least one of the following: providing an indication to the user equipment that soft bits for further downlink data transmission should not be stored, configuring the user equipment to use a smaller number of HARQ processes, modified scheduling parameters, or scheduling downlink data transmission to the user equipment on a smaller number of HARQ processes.

In a ninth aspect there is provided a non-transitory computer readable medium comprising program instructions for causing an apparatus to perform at least the method according to the third or fourth aspect.

In the above, many different embodiments have been described. It should be appreciated that further embodiments may be provided by the combination of any two or more of the embodiments described above.

*Description of Figures*

Embodiments will now be described, by way of example only, with reference to the accompanying Figures in which:

Figure 1 shows a schematic diagram of an example 5GS communication system;

Figure 2 shows a schematic diagram of an example mobile communication device;

Figure 3 shows a schematic diagram of an example control apparatus;

Figure 4 shows a flowchart of a method according to an example embodiment;

Figure 5 shows a flowchart of a method according to an example embodiment;

Figure 6 shows a signalling flow diagram between a UE and a BS according to an example embodiment;

Figure 7 shows a flowchart of a method at a UE according to an example embodiment;

Figure 8 shows a signalling flow diagram between a UE and a BS according to an example embodiment;

Figure 9 shows a flowchart of a method at a UE according to an example embodiment.

*Detailed description*

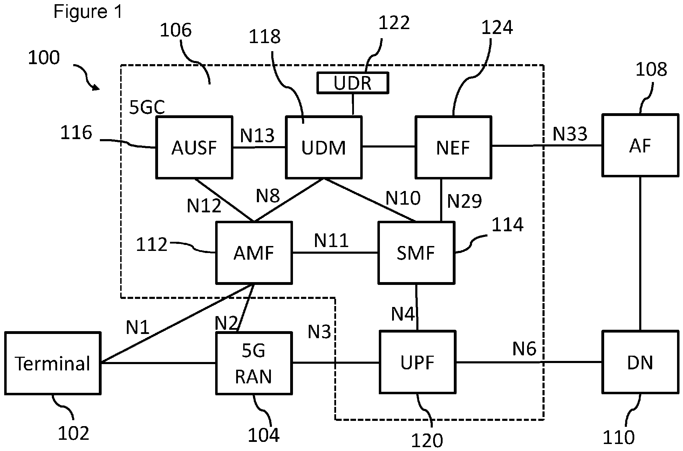

Before explaining in detail the examples, certain general principles of a wireless communication system and mobile communication devices are briefly explained with reference to Figure 1, Figure 2 and Figure 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN is connected to a UE via the Radio Access Network (RAN). The 5GRAN may comprise one or more gNodeB (gNB) Distributed Unit (DU) functions connected to one or more gNodeB (gNB) Centralized Unit (CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

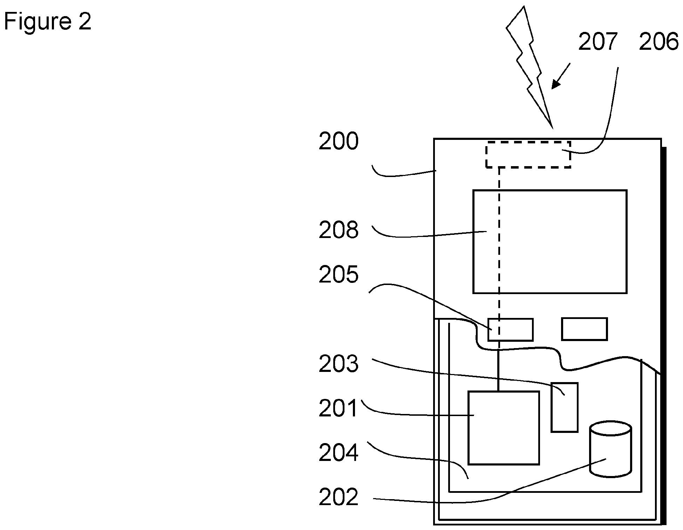

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehiclemounted wireless terminal devices, wireless endpoints, mobile stations, laptop-embedded equipment (LEE), laptop-mounted equipment (LME), smart devices, wireless customerpremises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant components can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

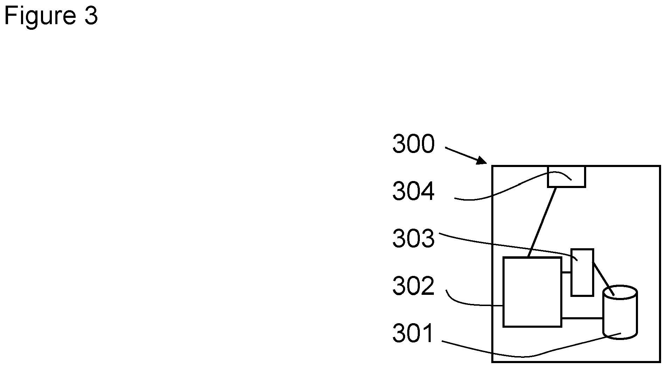

Figure 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW), or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Cellular radio communication systems support several different mechanisms for error handling on the radio interface between a base station (BS) (e.g., gNB) of a network and a terminal (e.g., UE) to reduce the loss of data on the air interface.

Some higher-layer error recovery mechanisms, such as TCP (Transmission Control Protocol) re-transmissions or RLC (Radio Link Control) re-transmissions may result in high latency and overhead. Systems such as 3G, 4G and 5G also support L1/physical layer re-transmissions using HARQ (Hybrid Automatic Repeat reQuest).

The operation of HARQ in 4G/LTE and 5G/NR is based on operation in terms of addressable HARQ processes. For PDSCH operation, the BS is made aware of a successful reception (i.e., "ACK") or unsuccessful reception (i.e. "NACK") based on HARQ-ACK feedback by the UE to the BS.

When receiving "NACK" for a certain HARQ process, the BS may schedule a re-transmission to the UE of the transport block associated with the HARQ process. The same may happen in the case when the BS fails to receive "NACK" or "ACK" indicating that either UE failed to receive the DL resource allocation grant scheduling the HARQ process (which means UE did not even transmit "NACK" or "ACK"), or BS failed to receive the HARQ-ACK feedback (i.e. "ACK" or "NACK" was interpreted as "DTX" (Discontinuous Transmission), i.e. "no transmission")). To be able to combine the received data of an earlier transmission attempt and a later re-transmission, the UE stores soft-buffer data of the transport block in its soft buffer memory to enable combining of the initial (i.e., first) transmission and potential retransmissions to improve the detection reliability across all the transmission attempts by the BS.

Two different combining mechanisms are currently defined. The first is chase combining (CC) where all the transmissions (e.g., original transmission and re-transmissions) use the same coded data of the transport block and the second is Incremental Redundancy (IR) where different parts of the coded data are transmitted in the transmission attempts allowing for increased coding redundancy of the underlying shared channel (SCH) channel codec which may lead to further improved PDSCH detection reliability.

4G and 5G support HARQ for shared channel (SCH) operation in UL and DL, i.e., for PUSCH and PDSCH. There is the inherent assumption in the system design and operation that the UE has sufficient soft-buffer memory up to its full capability in terms of supported DL data rates & HARQ processes to support DL HARQ soft-combining (requiring soft-buffer memory).

Currently, the UE will flush the soft-buffer of a HARQ process, if the UE is indicated a new initial PDSCH transmission of the HARQ process by dynamic scheduling based on a toggled NDI (new data indicator field) in the DCI. UE flushes the soft-buffer for SPS PDSCH when a new semi-persistent scheduling grant for the same HARQ process is available.

HARQ re-transmission operation may be efficient since the UE combining of the BS transmission attempts improves the reliability and reduces the required radio resources (in terms of transmission power, radio resource consumption etc.) compared to a re-transmission without L1 combining of the received signals of the initial transmission and the retransmissions.

On the other hand, with ever increasing data rates supported by the UEs as well as an increasing number of HARQ processes, there is an increasing requirement on soft-buffer memory to store the soft-buffer values of PDSCH receptions.

A UE is only seldomly scheduled with data rates that require full soft-buffer memory. Most of the time only a portion of the soft-buffer memory is used. Such very fast memory suitable for soft-buffer memory may be expensive and therefore, there is an attempt for 6G to operate the UE with less soft-buffer memory to keep the 6G technology cost reasonable compared to current 4G/5G.

UE's expensive soft buffer memory does not need to be dimensioned according to the peak throughput that the UE supports, as most of the time the expensive memory would be utilized only partially. However, when UE does not have enough soft-buffer for all HARQ processes, the decoding performance for re-transmissions degrades. This leads to non-optimal link adaptation and performance when BS is unaware how the UE manages the soft-buffer shortage with respect to HARQ processes.

Removing the L1 HARQ re-transmissions from the 6G system would remove the need for soft-buffer memory in the UE. However, this would happen at the expense of reduced DL system performance since the DL HARQ combining gain over the case of only operating with L1 ARQ (i.e. PDSCH re-transmission without received signal combining of the transmission attempts) would be lost.

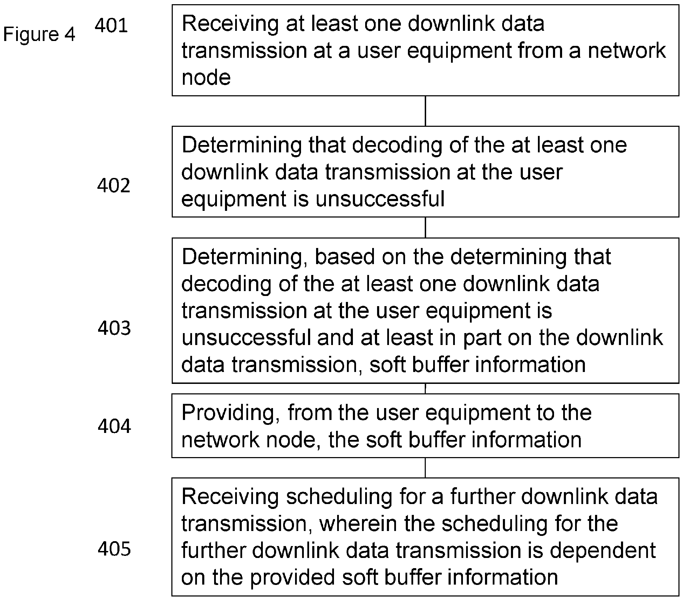

Figure 4 shows a flowchart of a method according to an example embodiment.

In 401, the method comprises receiving at least one downlink data transmission at a user equipment from a network node.

In 402, the method comprises determining that decoding of the at least one downlink data transmission at the user equipment is unsuccessful.

In 403, the method comprises determining, based on the determining that decoding of the at least one downlink data transmission at the user equipment is unsuccessful and at least in part on the downlink data transmission, soft buffer information.

In 404, the method comprises providing, from the user equipment to the network node, the soft buffer information.

In 405, the method comprises receiving scheduling for a further downlink data transmission, wherein the scheduling for the further downlink data transmission is dependent on the provided soft buffer information.

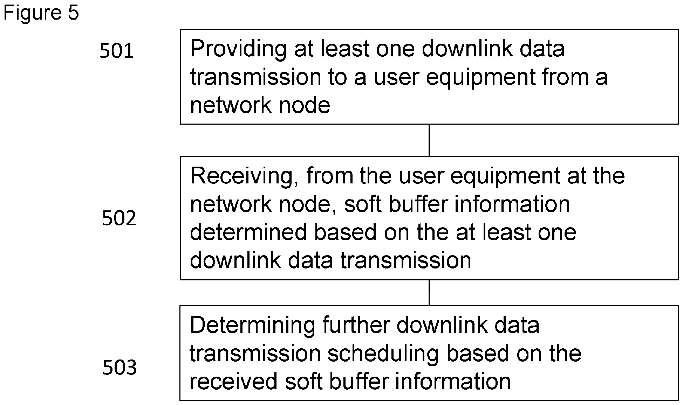

Figure 5 shows a flowchart of a method according to an example embodiment.

In 501, the method comprises providing at least one downlink data transmission to a user equipment from a network node.

In 502, the method comprises receiving, from the user equipment at the network node, soft buffer information determined based on the at least one downlink data transmission.

In 503, the method comprises determining further downlink data transmission scheduling based on the received soft buffer information.

The at least one DL transmission may be transmitted via PDSCH. The at least one DL transmission may comprise one or more spatial layers, one or more transport blocks and/or one or more HARQ processes transmitted during one or more time slots.

Determining that decoding of the at least one downlink data transmission at the user equipment is unsuccessful may be based e.g. on cyclic redundancy bits (using e.g. a cyclic redundancy check (CRC)), or any other suitable means of identifying the reliability of the data transmission.

Receiving scheduling for a further downlink data transmission may comprise e.g. PDCCH monitoring (a.k.a. blind detection), reading the Downlink Control Information (DCI) from the detected PDCCH, and operating according to received DCI. A DCI may include PDSCH resource information (e.g., which PRB and OFDM symbols of the UE do not map data). A DCI may also include also modulation and coding (MCS) related info and/or HARQ related information, e.g., HARQ process ID, RV and/or NDI.

Method may provide mechanisms to manage the soft-buffer usage for UEs with limited soft-buffer memory. Alternatives for managing shortage of soft-buffer usage are proposed as follows.

A method as described with reference to Figure 4 may comprise receiving a configuration from the network node at the user equipment to provide the soft buffer information. The configuration may be received using RRC signalling or MAC CE. The configuration may comprise a configuration of soft buffer information reporting or an activation or deactivation of soft buffer information reporting.

The configuration may be provided from the network node to the user equipment in response to an indication of user equipment soft buffer information reporting capability from the user equipment to the network node.

Determining further downlink transmission scheduling may comprise at least one of the following: providing an indication to the user equipment that soft bits for further downlink data transmission should not be stored, configuring the user equipment to use a smaller number of HARQ processes, modifying scheduling parameters, or scheduling downlink data transmission to the user equipment on a smaller number of HARQ processes (e.g., the BS may schedule re-transmission of HARQ processes / PDSCHs for which it is indicated that no soft-buffer bits have been stored).

In an example embodiment, based on the indication provided by the UE, the UE does not expect a re-transmission with any other RV than RV0 for a (group of) HARQ processes it indicated that soft-buffer bits have not been stored. Similarly, the BS in its potential re-transmission decision will take the information into account, and will not schedule a re-transmission of a HARQ process with any other RV than RV0 that was (part of a group of HARQ processes) indicated as soft-buffer bits not stored. This is an example of determining further downlink data transmission scheduling based on the received soft buffer information. Re-transmission may comprise only a portion of the code block or code block groups of the PDSCH.

The soft buffer information may comprise an indication whether soft bits of the downlink data transmission are stored in a soft buffer memory of the user equipment. Each at least one data transmission is associated with a given hybrid automatic repeat request, HARQ, process such that the soft buffer information is associated with the given HARQ process.

In a first example embodiment, a UE indicates (e.g. as part of the HARQ-ACK feedback), that the soft-bits of the related HARQ process have not been stored (or have been stored) in the UEs soft-buffer memory.

For example, if a UE is short of soft-buffer memory, the UE selects some PDSCHs for which no soft-bits are stored. It may be up to UE to decide if to store the soft-bits from the decoded PDSCH of a HARQ process in its soft-buffer memory or not, and indicate to the BS if soft-bits of the HARQ process will be available for potential re-transmission soft-combining or not. This is an example of an indication whether soft bits of the downlink data transmission are stored in a soft buffer memory of the user equipment.

In an example embodiment, there is an implicit assumption that the UE stores soft- bits in case of unsuccessful reception (i.e. UE would indicate NACK) and would not store soft-bits in case of successful reception (i.e. UE would indicate ACK). Therefore, the reporting of 'ACK would implicitly indicate no soft-bits are stored and 'NACK' indicating 'soft-bits stored'. When soft-bits are not stored, the UE may also flush the soft-buffer of corresponding HARQ process(es) without waiting for NDI

For this alternative, there is no additional signalling overhead required in HARQ feedback on top of the ACK/NACK reporting.

The indication whether soft bits of the downlink data transmission are stored in a soft buffer memory of the user equipment may be provided with HARQ feedback.

In an example embodiment, as part of the HARQ-ACK feedback reporting, the UE indicates for the HARQ process, in addition to 'ACK' or 'NACK', whether or not it stored soft bits in a soft-buffer memory.

The indication may be provided as a separate bit with the HARQ feedback.

For example, in addition to the HARQ-ACK bit(s) for a HARQ process there may be one separate bit for the HARQ process for which HARQ-ACK is to be reported, which indicates by state '0' (or '1'), that the soft-bits of the HARQ process are stored by the UE or by state '1' (or '0') that the soft-buffer bits for the HARQ-ACK process have not been stored. For this case, there would be N+1 bits required for the HARQ-ACK feedback instead of N bits for HARQ-ACK for the legacy HARQ-ACK reporting. For this example embodiment, one additional bit for the indication of storing soft-bits of a HARQ process is appended to the HARQ-ACK bits of the HARQ process. N bits may be used to provide HARQ-ACK for multiple transport blocks code blocks, or code block groups of the downlink transmission. The information may provide decoding reliability information e.g. based on decoding log likelihood ratios instead of simple ACK/NACK information.

The HARQ-ACK feedback codebook construction may be based on per HARQ process or per PDSCH but instead of N bits, N+1 bits would be mapped for a certain HARQ-ACK process (or PDSCH).

The indication may be jointly coded with the HARQ feedback. In an example embodiment, the 'ACK / NACK' information of the UE is jointly coded with the indication on the soft-buffer storing using M bits for a HARQ processes (or PDSCHs).

Some states of the joint indication are to be associated with 'soft-bits' stored and some indicated states are associated with 'soft-bits not stored'.

The association to the states may be defined (hard-coded) in the specifications or defined by higher layer signaling (such as MAC CE or RRC)

There may be an implicit association for correctly received PDSCHs, that the UE would not store the soft-bits and for a reported 'ACK' BS automatically assumes that no-soft bits are stored.

This may allow for a smaller size of the information per HARQ process or to be combined with additional enhanced HARQ-ACK feedback information such as related to detection reliability.

The HARQ-ACK feedback codebook construction may be done based on HARQ processes or received PDSCHs or PDSCHs occasions but instead of N bits for a HARQ-ACK process (or PDSCH), M bits would be mapped for a certain HARQ-ACK process.

As one example, for a scheduled HARQ process with two transport blocks (resulting in N=2), e.g. M=2 bits could be used to indicate 4 states including:

> {ACK,ACK}, 'soft-bits not stored'
> {NACK,ACK}, 'soft-bits not stored'
> {ACK,NACK}, 'soft-bits not stored'
> {NACK,NACK}, 'soft-bits stored'

In another example embodiment, the indication is appended to the HARQ-ACK codebook (and jointly coded).

The appended information of the soft-bits storing may be based on a bitmap of size K, where each bit maps to either a HARQ process (or PDSCH) or a group/set of HARQ processes (or PDSCHs) for which HARQ-ACK is provided in the codebook (with one-to-one mapping with the HARQ-ACK positions in the codebook). Alternative the bitmap of size L could cover all HARQ processes configured to the UE in DL serving cell or all DL serving cells

If a bit maps to more than one HARQ-ACK process or PDSCH (e.g. to a group /set of HARQ processes or PDSCHs) a logical AND or OR operation could be used among the individual HARQ processes / PDSCHs within a group, based on '0' (or '1') being associated with soft-bits are stored for a HARQ-ACK process and '1' (or '0') being associated with soft-bits of a HARQ process or PDSCH to not be stored.

The HARQ-ACK process or PDSCH grouping to the K appended bits could be defined in the specifications or defined by higher layer signalling (such as MAC CE or RRC).

Alternatively, or in addition, the indication may be provided as part of UCI.

In an example embodiment, the indication by the UE to the BS is reported on PUCCH or PUSCH as uplink control information (UCI) independently of the HARQ-ACK reporting.

There may be a bitmap of size K, where there is either a bit for each HARQ process (or PDSCH) or for a group or set of HARQ processes (or PDSCHs) for the HARQ-processes (or PDSCH) where also HARQ-ACK is reported.

There may be a logical AND/OR operation applied within a group / set of more than one HARQ process (or PDSCH) and the definition of the group / set of HARQ processes (or PDSCHs) could be defined by the specification or higher layer signaling (such as RRC or MAC-CE)

There may be a bitmap of size L for each HARQ process or group / set of HARQ processes of a DL serving cell or all DL serving cells independently if HARQ-ACK is provided or not.

The logical AND/OR operation may be applied within a group / set of more than one HARQ process and the definition of the group / set of HARQ processes could be defined by the specification or higher layer signaling (such as RRC or MAC-CE).

The method may comprise determining whether to store soft bits for the downlink HARQ process based on at least one of the following: a priority associated with the downlink data transmission, whether the downlink data transmission is decoded successfully or an available capacity of the soft buffer memory.

The decision for either storing or not storing the soft-bits in its soft-buffer memory may be UE implementation specific. A soft bit storing decision may be based e.g., on a MCS threshold or a transport block size threshold (e.g., because smaller MCS may be decoded more reliably so soft bit storing may not be necessary). However, a UE may be restricted, e.g., by specification or configuration, to decide on storing/not storing of soft-bits only among lower priority PDSCHs and correctly received high priority PDSCHs (i.e. based on cyclic redundancy bits, the cyclic redundancy check (CRC) is passed). In other words, soft bits for high priority PDSCHs with failed CRC are always stored. The 'priority' of the PDSCH may be determined by at least one of the Logical Channel Priority (LCP) and the L1 / PHY priority of the HARQ-ACK associated with the PDSCH.

This is an example of determining whether to store soft bits for the downlink HARQ process based at least on a priority associated with the downlink data transmission.

The UE may not store soft-bits of successfully received / decoded PDSCH HARQ processes in its soft-buffer memory, as the PDSCH transport blocks associated with the HARQ process have been successfully received already and even if a re-transmission would be scheduled, the data has been delivered to higher layers already (including the HARQ-ACK "ACK" to MAC). Alternatively, UE may store only hard bits (with minimal memory consumption) for the successfully received PDSCH TBs. UE may also choose not to store the successfully received code blocks or code block groups forming a portion of PDSCH transport block(s). For this case, there may be an implicit assumption that for 'ACK' no soft-buffer is stored whereas for 'NACK' soft-bits are to be stored and the related signaling would be implicit here. This is an example of determining whether to store soft bits for the downlink HARQ process based at least on whether the downlink data transmission is decoded successfully.

If the UE is getting close to soft-buffer limit and could not decode the PDSCH transport blocks of a HARQ process correctly, depending on the priority of the PDSCH associated with the HARQ process, the UE may decide to store or not to store the soft-bits in its soft buffer memory.

The decision to store or not to store soft-bits of PDSCH of a certain priority may also be affected by the still available soft-buffer memory. For example, if the soft-buffer is empty, soft-bits of lower priority PDSCHs may be stored whereas as the soft-buffer is filling up and getting closer to the limit, lower priorities of PDSCH may be regarded as not worth saving the soft-bits to still keep some soft-buffer memory available for potentially scheduled high(er) priority PDSCHs associated with a HARQ process.

The UE may decide to not store the soft-bits of a HARQ process in its soft-buffer memory if there would not be sufficient soft-buffer memory available for storing them. This is an example of determining whether to store soft bits for the downlink HARQ process based at least on an available capacity of the soft buffer memory.

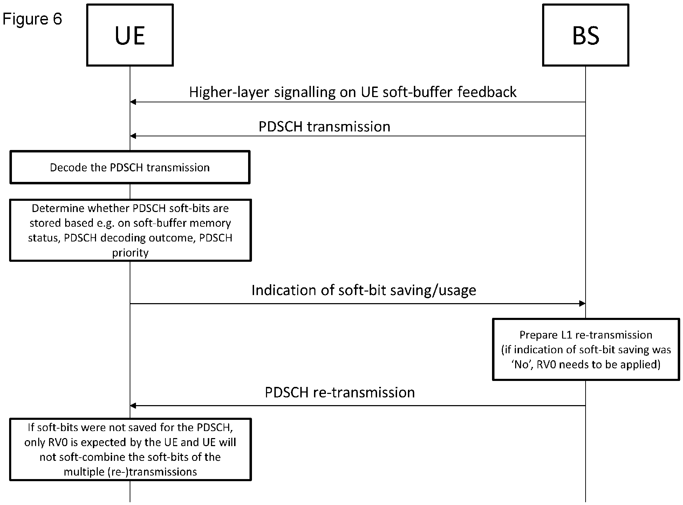

Figure 6 shows a flowchart between a UE and a BS for an example embodiment where a UE indicates that the soft-bits of the related HARQ process have not been stored in the UE's soft-buffer memory. This is an example where the soft buffer information comprises an indication whether soft bits of the downlink data transmission are stored in a soft buffer memory of the user equipment.

In step 0, the BS transmits higher layer signalling on the UE soft-buffer feedback reporting to the UE. The higher layer signaling may be sent using RRC or MAC CE. The higher layer signaling may contain the activation or configuration of the UE soft-buffer feedback reporting. The signaling may contain further information by the BS on prioritization of soft-buffer usage.

This is an example of receiving a configuration from the network node at the user equipment to provide the soft buffer information.

The activation/configuration may be done based on earlier UE signaling indicating its capability for soft-buffer feedback reporting. This is an example of providing an indication of user equipment soft buffer information reporting capability from the user equipment to the network node and receiving the configuration from the network node at the user equipment to provide the soft buffer information in response.

In step 1, the BS transmits a PDSCH to a UE. This is an example of providing at least one downlink data transmission to a user equipment from a network node.

In step 2, the UE receives and decodes the PDSCH. This is an example of receiving at least one downlink data transmission at a user equipment from a network node and determining that decoding of the at least one downlink data transmission at the user equipment is unsuccessful

In step 3, the UE the determines whether PDSCH soft-bits are to be stored. This is an example of determining, based on the determining that decoding of the at least one downlink data transmission at the user equipment is unsuccessful and at least in part on the downlink data transmission, soft buffer information. The decision for either storing or not storing the soft-bits in its soft-buffer memory may be UE implementation specific. Alternatively, or in addition, the UE may be restricted, by specification or configuration, to decide on storing/not storing of soft-bits only among lower priority PDSCHs (i.e. soft-bits for high priority PDSCHs are always stored) as described above.

In step 4, the decision to store and not store (i.e. having or not having available the) soft-bits of a DL HARQ process by the UE is indicated to the BS. The indication may be transmitted jointly with HARQ feedback or as a separate UCI. This is an example of providing the soft buffer information from the user equipment to the network node, wherein the soft buffer information comprises an indication whether soft bits of the downlink data transmission are stored in a soft buffer memory of the user equipment.

In step 5, based on the indication provided by the UE in step 4 received by the BS, the BS is only allowed to apply RV0 for re-transmission of HARQ processes / PDSCHs indicated that no soft-buffer bits have been stored. The BS applies this restriction when preparing a potential L1 re-transmission of a PDSCH. This is an example of determining further downlink data transmission scheduling based on the received soft buffer information

In step 6, the BS transmits a L1 re-transmission of a DL HARQ process or a PDSCH (transport block) to the UE.

In step 7, the UE when receives a L1 re-transmission of a DL HARQ process or a PDSCH (transport block), if in step 4 it was indicated that the soft-bits were not saved for the PDSCH, only RV0 is expected by the UE and UE will not soft-combine the soft-bits of the multiple (re-) transmissions. Otherwise, the UE receives the PDSCH and may apply soft-combining the soft-bits of the multiple (re-)transmissions.

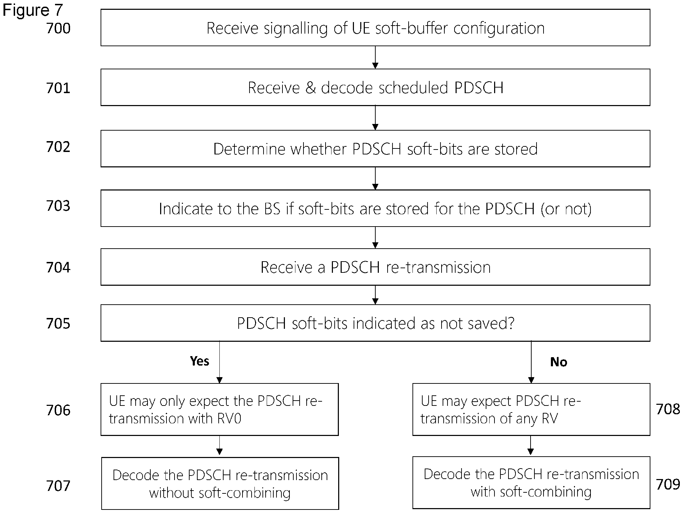

Figure 7 shows a flowchart of an example method from a UE perspective.

In 700, the UE receives higher layer signalling from a BS of UE soft-buffer configuration. The signaling may be performed through RRC or MAC CE. The signalling may inform the UE about enabling UE soft-buffer indication. The signaling may contain further information by the BS on prioritization of soft-buffer usage.

In 701, the UE receives an initial (i.e., first) PDSCH transmission and decodes the PDSCH.

In 702, the UE determines whether PDSCH soft-bits are stored.

In 703, the UE indicates to the BS, based on the determination of step 702, if PDSCH soft-bits are stored (or not). The indication may be transmitted jointly with HARQ feedback or as a separate UCI.

In 704, the UE receives a PDSCH re-transmission.

In 705, the UE determines if for the received PDSCH re-transmission of step 704, the soft-bits of the initial PDSCH transmission have been indicated as not saved('Yes') or not indicated as not saved ('NO') as determined in step 702.

If 'Yes', the UE proceeds to step 706.

In 706, the UE may only expect the PDSCH re-transmission to be scheduled with redundancy version RV0.

In 707, the UE decodes the PDSCH re-transmission without soft-bit combining the soft-bits of the multiple (re-)transmissions.

If 'No', the UE proceeds to step 708.

In 708, the UE may expect the PDSCH re-transmission to be scheduled with any supported HARQ re-transmission redundancy version.

In 709, the UE decodes the PDSCH re-transmission and may apply soft-bit combining of the soft-bits of the multiple (re-)transmissions.

The soft buffer information may comprise an indication of available soft buffer capacity.

In an example embodiment, the UE indicates to the BS its current status of available (or used) soft-buffer memory and the BS takes that information into account in its scheduling decision.

P bits could be appended to the HARQ-ACK feedback to indicate the soft-buffer status. The combined HARQ-ACK feedback (i.e. consisting of S bits for the HARQ-ACK codebook and the appended P bits for the soft-buffer status indication) are jointly encoded and then fed back to the BS as part of the HARQ-ACK feedback operation on PUCCH or PUSCH.

The soft buffer information may comprise an indication of available soft buffer capacity with respect to at least one threshold capacity value

For example, the UE could indicate with '0' that the current soft-buffer usage is below a soft-buffer threshold and '1' could indicate that the soft-buffer usage is above a certain threshold. The threshold may be fixed in the specification or could be defined by higher layer signalling (such as MAC CE or RRC).

The threshold may be defined in terms of share or percentage of the total available soft-buffer memory by the UE or could be defined in share of HARQ processes that occupy soft-buffer memory.

There may be more than one threshold defined to provide a higher granularity reporting, such as Q bits allowing for 2^Q-1 thresholds to be defined. For a single threshold, Q would equal to 1.

The indication on the threshold may be from UE perspective overall or could be also per DL serving cell configured and/or activated for DL carrier aggregation.

For the indication per UE, P=Q. For indication per serving cell, P would equal to P=Q*R, where R is the number of serving cells configured and/or activated for DL carrier aggregation. If the number of thresholds would be defined per serving cell or the indication would be operational per serving cell (i.e. is there indication or not), generally the number of bits required would be

$$P = \sum_{r=1}^{R} Q_r .$$

The indication of available soft buffer capacity may be provided with HARQ feedback, periodic uplink control information, aperiodic uplink control information or a medium access control control element.

For example, the indication of the soft-buffer status may be fed back by the UE as part of uplink control information (UCI) with P bits as described above. The reporting would not be bound to HARQ-ACK feedback but may be a new type of UCI, with associated UL resources. The related reporting may periodic or aperiodic based on higher layer signaling (such as RRC or MAC CE), with potential activation of the procedure using L1 signaling (similar to CSI reporting framework).

In another example embodiment, the signaling is carried through MAC CE from the UE to the gNB. Table 1 shows an example of such MAC CE. In this example embodiment, soft buffer status (SBS) is conveyed via 4-bit SBS field. Soft buffer status could have a dedicated LCID (logical channel identification) for UL-SCH (uplink shared channel).

| Reported value | Reported quantity (%) |
|---|---|
| Soft buffer_status_0 | <25 |
| Soft buffer_status_1 | 25 ≤ SBS < 30 |
| Soft buffer_status_2 | 30 ≤ SBS < 15 |
| Soft buffer_status_3 | 35 ≤ SBS < 40 |
| ... | ... |
| Soft buffer_status_13 | 85 ≤ S BS < 90 |
| Soft buffer_status_14 | 90 ≤ SBS < 95 |
| Soft buffer_status_15 | >95% |

Based on the provided information the BS can take the soft-buffer status of the UE into account in its further operation. In one example embodiment, the BS may decide to not schedule a new transmission to the UE on a HARQ process on a previously not used HARQ process but may schedule a new data transmission only on a HARQ process with soft-buffer bits.

In another example embodiment, the BS may indicate to the UE for a PDSCH transmission that soft-bits for the PDSCH should not be stored. BS could also apply different link adaptation (in transmission power or MCS setting) for PDSCH transmission for which soft-bits are not stored than for PDSCH transmission for which soft-bits are stored.

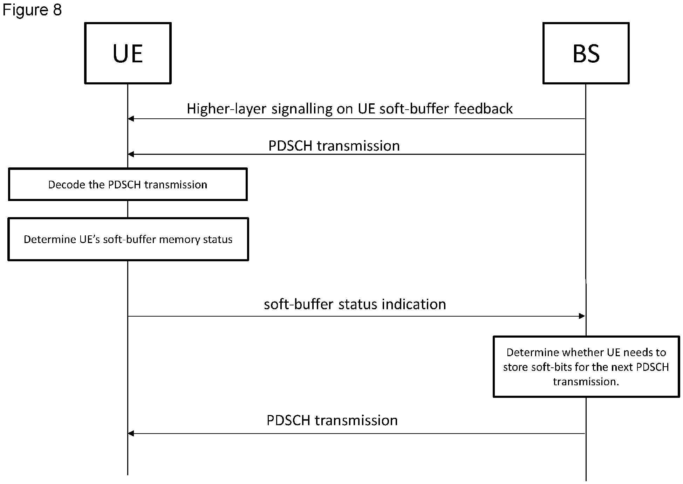

Figure 8 shows a signalling flow between a UE and a BS, for an example embodiment where a UE indicates to the BS its current status of the soft-buffer memory availability, to be taken into account by the BS in its further PDSCH operation for the UE. This is an example where the soft buffer information comprises an indication of available soft buffer capacity.

In step 0, the BS transmits higher layer signalling on the UE soft-buffer status reporting to the UE. The higher layer signaling may be sent using RRC or MAC CE. The higher layer signaling may contain the activation or configuration of the UE soft-buffer status reporting as well as related operational parameters such as reporting thresholds. The thresholds could be defined in terms of share or percentage of the available soft-buffer memory or could be defined in share of HARQ processes that occupy soft-buffer memory. The thresholds could be defined per UE (overall) or per DL serving cell. The activation / configuration may be done based on earlier UE signaling indicating its capability for soft-buffer reporting.

In step 1, the BS transmits a PDSCH to a UE.

In step 2, the UE receives and decodes the PDSCH.

In step 3, the UE determines after the related PDSCH decoding its current soft-buffer status. This is an example of determining, based on the determining that decoding of the at least one downlink data transmission at the user equipment is unsuccessful and at least in part on the downlink data transmission, soft buffer information.

In step 4, the UE feeds back information of its soft-buffer usage based on the determination of step 3. The indication of the soft-buffer status in the UE may be appended to the HARQ-ACK codebook feedback by the UE, namely P bits could be appended to the HARQ-ACK to indicate the soft-buffer status. The combined HARQ-ACK feedback (i.e. consisting of S bits for the HARQ-ACK codebook and the appended P bits for the soft-buffer status indication) are part of the feedback operation on PUCCH or PUSCH in step 4. Alternatively, the P bits may be transmitted as periodic or aperiodic uplink control information feedback or the signaling from the UE to be carried though a MAC CE. This is an example of providing the soft buffer information from the user equipment to the network node, wherein the soft buffer information comprises an indication of available soft buffer capacity.

In step 5, based on the provided information by the UE in step 4, the BS can take the soft-buffer status of the UE into account in its further operation by determining if UE needs to store further soft-buffer bits..

For example, the BS may decide to not schedule a new transmission to the UE on a HARQ process on a previously not used HARQ process but may schedule a new data transmission only on a HARQ process with soft-buffer bits.

In another example, the BS may indicate to the UE for a PDSCH transmission that soft-buffer bits for the PDSCH should not be stored.

In step 6, the BS transmits a PDSCH to the UE based on the BS considerations and/or determination of Step 5.

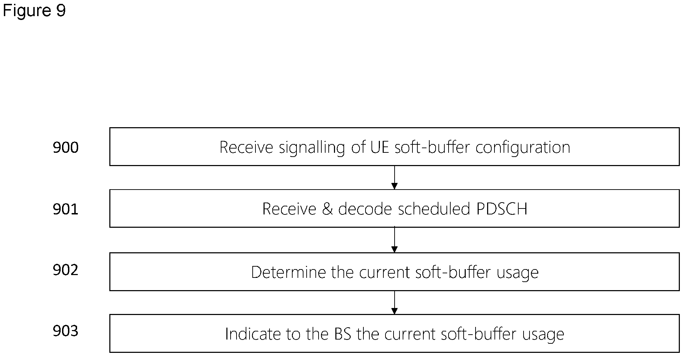

Figure 9 shows a flowchart of operation from a UE perspective.

In 901, the UE receives signaling on UE soft-buffer configuration. The signaling may be performed by higher layer signaling such as RRC or MAC CE. The signaling may contain the activation of the UE soft-buffer status reporting as well as related operational parameters such as reporting thresholds. The thresholds may be defined in terms of share or percentage of the available soft-buffer memory or could be defined in share of HARQ processes that occupy soft-buffer memory. The thresholds could be defined per UE (overall) or per DL serving cell.

In 901, the UE receives and decodes a PDSCH.

In 902, the UE determines after the related PDSCH decoding its current soft-buffer usage / status.

In 903, the UE indicates to the BS its soft-buffer usage / status based on the determination of step 902. The indication of the soft-buffer status in the UE could be appended to the HARQ-ACK codebook feedback by the UE, namely P bits could be appended to the HARQ-ACK to indicate the soft-buffer status. The combined HARQ-ACK feedback (i.e. consisting of S bits for the HARQ-ACK codebook and the appended P bits for the soft-buffer status indication) are part of the feedback operation on PUCCH or PUSCH in step 4. Alternatively, P bits may be transmitted as periodic or aperiodic uplink control information feedback or the signaling from the UE to be carried though a MAC CE.

Please note, that there could be also a combination of different examples, e.g., where the UE reports its current soft-buffer status as well as HARQ processes for which soft-bits have (or have not) been stored.

Alternatively, UE would report only soft-buffer status but when UE reports soft-buffer status above a certain threshold, UE will not store soft bits for any PDSCH, or for any PDSCH with lower priority or for a preconfigured portion of HARQ processes.

The method may provide good link adaptation and performance while relaxing the amount of expensive soft buffer memory UE is required to have and allowing UE to face situations with soft buffer shortage.

An apparatus may comprise means for receiving at least one downlink data transmission at a user equipment from a network node, means for determining that decoding of the at least one downlink data transmission at the user equipment is unsuccessful, means for determining, based on the determining that decoding of the at least one downlink data transmission at the user equipment is unsuccessful and at least in part on the downlink data transmission, soft buffer information, means for providing, from the user equipment to the network node, the soft buffer information and means for receiving scheduling for a further downlink data transmission, wherein the scheduling for the further downlink data transmission is dependent on the provided soft buffer information.

The apparatus may comprise the user equipment, such as a mobile phone, be the user equipment or be comprised in the user equipment or a chipset for performing at least some actions of/for the user equipment.

Alternatively, or in addition, an apparatus may comprise means for providing at least one downlink data transmission to a user equipment from a network node, means for receiving, from the user equipment at the network node, soft buffer information determined based on the at least one downlink data transmission and means for determining further downlink data transmission scheduling based on the received soft buffer information.

The apparatus may comprise the network node, such as a gNB, be the network node or be comprised in the network node or a chipset for performing at least some actions of/for the network node.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

I hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. An apparatus comprising:

   means for receiving at least one downlink data transmission at a user equipment from a network node;
   means for determining that decoding of the at least one downlink data transmission at the user equipment is unsuccessful;
   means for determining, based on the determining that decoding of the at least one downlink data transmission at the user equipment is unsuccessful and at least in part on the downlink data transmission, soft buffer information;
   means for providing, from the user equipment to the network node, the soft buffer information; and
   means for receiving scheduling for a further downlink data transmission, wherein the scheduling for the further downlink data transmission is dependent on the provided soft buffer information.

2. The apparatus according to claim 1, wherein the soft buffer information comprises an indication whether or not soft bits of the downlink data transmission are stored in a soft buffer memory of the user equipment.

3. The apparatus according to claim 1 or claim 2, wherein each at least one data transmission is associated with a given hybrid automatic repeat request, HARQ, process

4. The apparatus according to claim 2 or claim 3, wherein the indication is provided with HARQ feedback or uplink control information.

5. The apparatus according to any of claims 1 to 4, comprising means for determining whether to store soft bits for the downlink HARQ process based on at least one of the following: a priority associated with the downlink data transmission, whether the downlink data transmission is decoded successfully or an available capacity of the soft buffer memory.

6. The apparatus according to any of claims 1 to 5, wherein the soft buffer information comprises an indication of available soft buffer capacity.

7. The apparatus according to claim 6, wherein the soft buffer information comprises an indication of available soft buffer capacity with respect to at least one threshold capacity value.

8. The apparatus according to any of claims 1 to 7, comprising means for receiving a configuration from the network node at the user equipment to provide the soft buffer information.

9. The apparatus according to claim 8, wherein the configuration comprises a configuration of soft buffer information reporting or an activation of soft buffer information reporting.

10. The apparatus according to any of claims 8 or 9, comprising means for providing an indication of user equipment soft buffer information reporting capability from the user equipment to the network node and means for receiving the configuration from the network node at the user equipment to provide the soft buffer information in response.

11. The apparatus according to any of claims 1 to 10, wherein the scheduling received for the further downlink data transmission is dependent on at least one of the following means: receiving a configuration to use a smaller number of HARQ processes, modified scheduling parameters, receiving an indication not to save soft buffer values for the corresponding downlink data transmission or receiving a scheduling for the further downlink data transmission on a smaller number of HARQ processes.

12. An apparatus comprising:

   means for providing at least one downlink data transmission to a user equipment from a network node;
   means for receiving, from the user equipment at the network node, soft buffer information determined based on the at least one downlink data transmission; and

means for determining further downlink data transmission scheduling based on the received soft buffer information.

13. A method comprising:

receiving at least one downlink data transmission at a user equipment from a network node;
determining that decoding of the at least one downlink data transmission at the user equipment is unsuccessful;
determining, based on the determining that decoding of the at least one downlink data transmission at the user equipment is unsuccessful and at least in part on the downlink data transmission, soft buffer information;
providing, from the user equipment to the network node, the soft buffer information; and
receiving scheduling for a further downlink data transmission, wherein the scheduling for the further downlink data transmission is dependent on the provided soft buffer information.

14. A computer readable medium comprising instructions which, when executed by an apparatus, cause the apparatus to perform at least the following:

receiving at least one downlink data transmission at a user equipment from a network node;
determining that decoding of the at least one downlink data transmission at the user equipment is unsuccessful;
determining, based on the determining that decoding of the at least one downlink data transmission at the user equipment is unsuccessful and at least in part on the downlink data transmission, soft buffer information;
providing, from the user equipment to the network node, the soft buffer information; and
receiving scheduling for a further downlink data transmission, wherein the scheduling for the further downlink data transmission is dependent on the provided soft buffer information.

15. A computer readable medium comprising instructions which, when executed by an apparatus, cause the apparatus to perform at least the following:

providing at least one downlink data transmission to a user equipment from a network node;
receiving, from the user equipment at the network node, soft buffer information determined based on the at least one downlink data transmission; and
determining further downlink data transmission scheduling based on the received soft buffer information.

Figure 1

Figure 2

Figure 3

Figure 4  401 | Receiving at least one downlink data transmission at a user equipment from a network node

402 | Determining that decoding of the at least one downlink data transmission at the user equipment is unsuccessful

403 | Determining, based on the determining that decoding of the at least one downlink data transmission at the user equipment is unsuccessful and at least in part on the downlink data transmission, soft buffer information

404 | Providing, from the user equipment to the network node, the soft buffer information

405 | Receiving scheduling for a further downlink data transmission, wherein the scheduling for the further downlink data transmission is dependent on the provided soft buffer information

Figure 5

| 501 | Providing at least one downlink data transmission to a user equipment from a network node |

| 502 | Receiving, from the user equipment at the network node, soft buffer information determined based on the at least one downlink data transmission |

| 503 | Determining further downlink data transmission scheduling based on the received soft buffer information |

Figure 6

```
                    ┌─────────┐                                    ┌─────────┐
                    │   UE    │                                    │   BS    │
                    └─────────┘                                    └─────────┘
                         │                                              │
                         │◄───Higher-layer signalling on UE soft-buffer feedback───│
                         │                                              │
                         │◄──────────PDSCH transmission────────────────│
                         │                                              │
    ┌─────────────────────────┐                                        │
    │ Decode the PDSCH transmission │                                  │
    └─────────────────────────┘                                        │
    ┌─────────────────────────┐                                        │
    │ Determine whether PDSCH soft-bits are                            │
    │ stored based e.g. on soft-buffer memory                          │
    │ status, PDSCH decoding outcome, PDSCH                            │
    │          priority        │                                       │
    └─────────────────────────┘                                        │
                         │────────Indication of soft-bit saving/usage──────►│
                         │                                              │
                         │                        ┌──────────────────────────────┐
                         │                        │ Prepare L1 re-transmission     │
                         │                        │ (if indication of soft-bit saving was │
                         │                        │ 'No', RV0 needs to be applied) │
                         │                        └──────────────────────────────┘
                         │◄──────────PDSCH re-transmission─────────────│
    ┌─────────────────────────┐                                        │
    │ If soft-bits were not saved for the PDSCH,                       │
    │ only RV0 is expected by the UE and UE will                       │
    │ not soft-combine the soft-bits of the                           │
    │ multiple (re-)transmissions │                                    │
    └─────────────────────────┘                                        │
                         │                                              │
```

**Figure 7**

700     Receive signalling of UE soft-buffer configuration

701     Receive & decode scheduled PDSCH

702     Determine whether PDSCH soft-bits are stored

703     Indicate to the BS if soft-bits are stored for the PDSCH (or not)

704     Receive a PDSCH re-transmission

705     PDSCH soft-bits indicated as not saved?

**Yes**

706     UE may only expect the PDSCH re-transmission with RV0

707     Decode the PDSCH re-transmission without soft-combining

**No**

708     UE may expect PDSCH re-transmission of any RV

709     Decode the PDSCH re-transmission with soft-combining

Figure 8

Figure 9

| 900 | Receive signalling of UE soft-buffer configuration |
| 901 | Receive & decode scheduled PDSCH |
| 902 | Determine the current soft-buffer usage |
| 903 | Indicate to the BS the current soft-buffer usage |

Europäisches
Patentamt

European
Patent Office

Office européen
des brevets

# EUROPEAN SEARCH REPORT

**Application Number**

EP 23 20 1274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/133677 A1 (SUN LI HSIANG [US] ET AL) 4 May 2023 (2023-05-04) <br> * paragraphs [0030], [0188] – [0200] * | 1-15 | INV. <br> H04L1/1607 <br> H04L1/1822 <br> H04L1/1829 |
| X | WO 2017/088920 A1 (NOKIA SOLUTIONS & NETWORKS OY [FI]) 1 June 2017 (2017-06-01) <br> * figure 7 * <br> * page 16, line 21 – page 18, line 25 * <br> * claims 1-6 * | 1-15 | H04L1/1867 |
| X | GB 2 554 661 A (FUJITSU LTD [JP]) 11 April 2018 (2018-04-11) <br> * figure 9 * <br> * page 20, line 17 – page 21, line 10 * | 1,3,4, 12-15 | |
| X | INTEL CORPORATION: "Discussion on HARQ for NTN", 3GPP DRAFT; R1-1912213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE <br> , <br> vol. RAN WG1, no. Reno, USA; 20191118 – 20191122 9 November 2019 (2019-11-09), XP051823290, Retrieved from the Internet: URL:https://ftp.3gpp.org/tsg_ran/WG1_RL1/T SGR1_99/Docs/R1-1912213.zip R1-1912213 Discussion on HARQ for NTN.docx [retrieved on 2019-11-09] * page 3 * | 1,12-15 | TECHNICAL FIELDS SEARCHED (IPC) <br><br> H04L |

The present search report has been drawn up for all claims

| Place of search | Date of completion of the search | Examiner |
|---|---|---|
| The Hague | 6 March 2024 | Fintoiu, Ioana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 1274**

This annex lists the patent family members relating to the patent documents cited in the above-mentioned European search report.
The members are as contained in the European Patent Office EDP file on
The European Patent Office is in no way liable for these particulars which are merely given for the purpose of information.

**06-03-2024**

| Patent document cited in search report | Publication date | Patent family member(s) | Publication date |
|---|---|---|---|
| US 2023133677 A1 | 04-05-2023 | CN 115315909 A | 08-11-2022 |
| | | EP 4118764 A1 | 18-01-2023 |
| | | JP 2023519500 A | 11-05-2023 |
| | | US 2023133677 A1 | 04-05-2023 |
| | | WO 2021183788 A1 | 16-09-2021 |
| WO 2017088920 A1 | 01-06-2017 | NONE | |
| GB 2554661 A | 11-04-2018 | NONE | |

EPO FORM P0459

For more details about this annex : see Official Journal of the European Patent Office, No. 12/82